# EUROPEAN PATENT APPLICATION

(11) **EP 4 768 530 A1**
(43) Date of publication of application: **01.07.2026**
(21) Application number: 24223423.5
(22) Date of filing: 27.12.2024
(51) Int. Cl.: C08K 3/013, C08K 5/092, C08K 5/3445, C08L 7/00

(54) **SPORT FLOOR COMPONENT COMPRISING REVERSIBLY CROSS-LINKED ENR**

(71) Applicant: Melos GmbH, 49324 Melle (DE)
(72) Inventor: SALLAT, Aladdin, 49326 Melle (DE); TEBBEN, Maike, 31675 Bückeburg (DE); SICK, Stephan, 76534 Baden-Baden (DE); GROCHLA, Dario, 44869 Bochum (DE)
(74) Representative: Richardt Patentanwälte PartG mbB

(57) **Abstract**

Disclosed is a method of manufacturing a sports floor component (200, 404), comprising:
- mixing (102) epoxidized natural rubber, ENR, a filler (700, 904, 1104, 1112) and imidazole or an imidazole derivate to provide a rubber composition;
- curing (106) the rubber composition to form a matrix of reversibly cross-linked ENR molecules incorporating the filler.

## Description

### FIELD OF THE INVENTION

The invention relates to the field sport floors and components thereof.

### BACKGROUND

The use of synthetic materials in sports flooring systems, including artificial grass infill, running tracks, and shock pads, has become widespread due to their performance characteristics, durability, and ability to meet the demands of modern sports and recreational activities. However, these materials are predominantly manufactured from non-renewable, petrochemical-based resources such as polyurethane, polyethylene, EPDM (ethylene propylene diene monomer rubber), and styrene-butadiene rubber (SBR). The reliance on such petro-based materials poses significant environmental and sustainability challenges.

A key challenge with these components is their lifecycle reliance on finite fossil resources. A further challenge is that these components are often difficult to recycle due to the use of non-degradable plastic material. Therefore, old sports floor components often end up in landfills or are incinerated. If the incineration conditions are not chosen properly, harmful pollutants may potentially be released.

A further problem may be caused by displaced microplastics and granules which accumulate in nearby soil, waterways, and drainage systems: During their operational life, sports floor components such as artificial grass infill and running tracks are exposed to mechanical wear, weathering, and ultraviolet (UV) degradation. These processes result in material fragmentation, leading to the release of particles into the environment and contributing to a shortened lifespan of the components. Moreover, mechanical wear, weathering, and ultraviolet (UV) degradation changes the chemical composition of sports floor components and, accordingly, of their mechanical performance. In many cases, clumping of the materials is observed. Despite the above-mentioned drawbacks, petrochemical-based, non-degradable polymers have been widely used in sports flooring applications due to their robustness and ability to withstand harsh environmental conditions and mechanical stressors.

Alternatives such as recycled materials have been explored, but these often lack the necessary chemical or mechanical properties to meet the demanding requirements of sports flooring. In particular, some of these materials exhibit a reduced lifespan, making them less viable for long-term use in high-performance applications.

### SUMMARY OF THE INVENTION

It is an objective to provide for an improved sports floor component and method for manufacturing the same. The objectives underlying the invention are solved by the features of the independent claims.

In one aspect disclosed herein is a method of manufacturing a sports floor component. The method comprises mixing epoxidized natural rubber, ENR, a filler and imidazole or an imidazole derivate to provide a rubber composition; and curing the rubber composition to form a matrix of reversibly cross-linked ENR molecules incorporating the filler.

In a further aspect, described herein is a sports floor component comprising reversibly cross-linked epoxidized natural rubber, and further comprising a filler..

It is understood that one or more of the examples described herein may be combined as long as the combined examples are not mutually exclusive.

### BRIEF DESCRIPTION OF THE DRAWINGS

In the following, examples are described in greater detail making reference to the drawings in which:
Fig. 1 is a flow chart of a method of manufacturing a sports floor component;
Fig. 2 illustrates a sports floor component in the form of infill;
Fig. 3 illustrates artificial turf comprising the infill;
Fig. 4 illustrates a sports floor component configured as a support layer within a sports floor system;
Fig. 5 illustrates a sports floor in the form of a running track;
Fig. 6 illustrates a sports floor in the form of a shock pad;
Fig. 7 illustrates the structure of lignin from a softwood;
Fig. 8 illustrates the epoxidation reaction of natural rubber;
Fig. 9 illustrates a matrix of covalently cross-linked rubber molecules;
Fig. 10 illustrates a matrix of covalently cross-linked rubber molecules also cross-linked with filler molecules;
Fig. 11 illustrates a high temperature dynamic heat treatment (HTDHT) procedure applied on an ENR-lignin mixture;
Fig. 12 illustrates reversible ionic cross-links catalyzed by dimethylimidazole;
Fig. 13 illustrates ester bonds cross-links between ENR molecules and a carboxylic acid molecule; and
Fig. 14 is an illustration of a further type of reversible ionic ENR molecule cross-linking.

### DETAILED DESCRIPTION

Manufacturing and using a sports floor component comprising reversibly cross-linked ENR and a filler offers significant technical and environmental benefits:

The above-mentioned sports floor component is environmentally friendly, because it is made of renewable and sustainable materials: epoxidized natural rubber is derived from natural rubber, which again is sourced from renewable plant-based latex, reducing dependence on non-renewable petrochemicals. In case a renewable filler like lignin is used, also the filler is made of a renewable, plant-based material. Hence, the production of natural rubber (optionally also comprising a renewable filler like lignin) generates fewer greenhouse gas emissions compared to synthetic, petrochemical-based rubbers. In many cases, the use of lignin-based filler may even result in a negative CO2 footprint. Furthermore, components made from ENR are more likely to degrade over time in natural environments than many petro-based alternatives, reducing long-term plastic pollution.

The imidazole or imidazole derivate acts as an epoxide-ring-opening agent which will react with the epoxide groups of ENR to form a modified ENR molecules comprising a plurality of imidazole (or imidazole derivative) groups at the former epoxide sites. These imidazole (or imidazole derivative) groups are positively charged and will form reversible, ionic bonds with negatively charged groups of other ENR molecules (e.g., OH groups), or with other substances (e.g. polyfunctional carboxylic acids), thereby indirectly reversibly cross-linking different imidazolized ENR molecules via the other negatively charged substances.

In addition, imidazole (or the imidazole derivative) may act as a catalyst to facilitate the reaction of other substances (e.g. polyfunctional carboxylic acids acting as cross-linkers) with the epoxide sites of the ENR, thereby forming covalent cross-links, in particular ester bonds, between different ENR molecules. Hence, by combining the imidazole or imidazole derivate with additional substances such as polyfunctional carboxylic acids, it is possible to create covalent cross-links between different ENR molecules in addition to direct and indirect reversible ionic cross-links between different ENR molecules.

The reversible cross-linking of ENR may be particularly advantageous, because the reversible cross-links will enhance elasticity, durability, and resistance to wear during the usage time of the sports floor component, making it highly suitable for high-performance sports applications. At the same time, the reversible cross-links allow for an accelerated degradation at the end-of-life of the sports floor component as they are less stable than covalent bonds and may allow to break the reversible cross-links in a controlled manner. In many cases, the reversible cross-links may allow, at the end-of-life of the sports floor, to induce or boost the degradation and/or composting of the rubber network by heating the used sports floor component, thereby destroying the reversible cross-links. In some cases, where the sports-floor is completely made of biodegradable material, this may significantly reduce the time until the sports-floor component has completely degraded. In other cases, where the sports-floor is a composite or combination of biodegradable and non-biodegradable components, at least the biodegradable components will degrade quickly and in a controlled manner, thereby reducing the total volume of plastic waste that ends up in a land fill, that is incinerated or that needs to be recycled. The biodegradable components may be turned into humus and used as fertilizer or soil additive.

In an imidazole-mediated cross-linking reaction, a mixture of reversible and irreversible ENR-molecule cross-links may be formed. However, in contrast to sports-floor components manufactured in a vulcanization process which generates a large number of irreversible, covalent cross-links, at least a portion of the cross-links generated in an imidazole-mediated cross-linking reaction is reversible, and this portion is large enough as to allow for a controlled induction of degradation of the sports floor component at its end-of-life in response to heat treatment.

According to examples, at least 50% of the cross-links generated during the imidazole-(or imidazole-derivate)mediated cross-linking reaction are reversible, with preferred values being at least 70%, more preferably at least 90%, and most preferably approximately 100%. The inventors have observed that a higher proportion of reversible cross-links enhances the beneficial properties of the resulting sports floor component in terms of biodegradability and/or in terms of minimizing microplastic generation: When the sports floor component is subjected to heat treatment at the end of its life-typically at temperatures between 150°C and 250°C-the reversible cross-links break, converting the reversibly cross-linked portions back into non-cross-linked ENR. This non-cross-linked ENR is biodegradable and does not constitute microplastic. Therefore, increasing the proportion of reversible cross-links directly increases the share of biodegradable material and reduces the potential for microplastic formation.

In preferred embodiments, the use of imidazole-based or imidazole-derivative-based reversible cross-linking enables the sports floor component to be fully transformed into a biodegradable material through heat treatment at the end of its life. Unlike vulcanized rubber, which retains covalent cross-links, the heat-treated ENR from the reversible cross-linking process preferably contains no covalent cross-links and thus does not constitute microplastic. Furthermore, natural rubber has a higher tensile strength, and higher "green strength" than many petro-based rubbers such as EPDM (NR shows additionally a so called "strain induced crystallization"). The term "green strength" refers to the strength and cohesiveness of unvulcanized rubber. It describes the rubber's ability to resist deformation, tearing, or breaking during processing and handling. Natural rubber inherently has high green strength due to its unique molecular structure, which includes long polymer chains with a high degree of entanglement. By introducing reversible cross-links as described herein, the green strength and tensile strength may further be increased without making the resulting ENR network too rigid or inflexible.

Hence, the use of reversibly cross-linked ENR may overcome the disadvantage of natural rubber compared to petro-based rubber: petro-based rubber such as EPDM is often saturated and engineered with only few reactive sites and hence shows a higher UV resistance, radical resistance and oxidation resistance than natural rubber. The backbone of natural rubber is made of Cis-1,4-polyisoprene comprising many unsaturated and highly reactive bonds which are prone to light-induced decay and oxidation. By reversibly cross-linking the ENR via imidazole and/or imidazole derivates, these disadvantages of natural rubber may be reduced or overcome. Hence, a bio-based, renewable, and more easily degradable alternative to petro-based sport flooring components is provided which shows a similar robustness against UV light, ozone, radicals and oxidative stress like highly saturated petro-based components. The resulting ENR-based sports floor component may also allow to temporarily destabilize or break the reversible cross-links, e.g. during installation, repair or de-installation, thereby temporarily increasing the flexibility of the material which may ease the handling of the material.

Preferably, the ENR is not cured via a sulfur based or a sulfur-peroxide system, because the irreversible cross-links introduced during conventional vulcanization would inhibit or cancel out the reversible, dynamic characteristics provided by the reversible, ionic imidazole-mediated cross-linking of ENR molecules.

The imidazole derivate can be, for example, an alkyl-substituted derivate of imidazole, in particular a dialkyl-substituted derivate of imidazole. Preferably, the alkyl group has a chain length of fewer than 5 carbon atoms. The inventors have observed that imidazole derivatives with only short side chains, or none at all, exhibit improved reactivity. This is likely due to enhanced accessibility to the epoxide groups of the ENR, as the absence or reduction of longer side chains minimizes steric hindrance. According to other embodiments, the imidazole derivate is butyl-imidazole. In some embodiments, mixtures of imidazole and imidazole derivates or of different imidazole derivates may be used.

According to preferred embodiments, the imidazole derivate is a dimethyl-substituted derivative of imidazole, in particular 1,2-dimethyl imidazole.

The use of 1,2-dimethyl imidazole (or "DMI" in the following) was observed to provide a particularly high reactivity and a high rate of reversible cross-linking of different ENR molecules when the DMI was combined with one or more carboxylic acids. Hence, according to embodiments, a reaction mixture is prepared that comprises at least ENR, a filler, DMI and one or more carboxylic acids.

A high cross-linking rate (also referred to as "conversion rate"), i.e., the formation of a large number of cross-links per time during the curing process, is important, because the curing process requires high temperatures. An extended curing time has been observed to weaken the cured ENR network's ultimate mechanical characteristics. The cross-linking rate is a crucial factor that influences the processing time and overall efficiency of material production.

In reaction mixtures not comprising a polyfunctional carbonic acid, imidazole was observed to be a stronger enhancer of reversible ENR cross-linking than DMI. However, DMI was observed to strongly enhance the cross-linking rate and efficiency in the presence of polyfunctional carboxylic acids, in particular of carboxylic acids having chain lengths between C4-C12. When combined with polyfunctional carboxylic acids, DMI often showed an improved effectiveness in ENR cross-linking than imidazole.

The term "cross-linking efficiency" denotes the effectiveness of the cross-linking process, usually defined as the number of cross-links formed per unit of cross-linking agent consumed. It is calculated by comparing the actual number of chemical cross-links produced to the theoretical maximum possible given the amount of cross-linking agent used. Hence, while the cross-linking rate is about the speed and kinetics of the cross-linking process, the cross-linking efficiency is about how well the cross-linking agent (imidazole or imidazole derivate, optionally also a polyfunctional carboxylic acid) is utilized to form permanent cross-links in the ENR.

Cross-linking rate and efficiency can be evaluated through various means such as rheometric methods or spectroscopic techniques.

That the DMI can show improved cross-linking effectiveness compared to imidazole when combined with polyfunctional carboxylic acids is somewhat surprising, because in imidazole, the highly reactive N-1 position of the 1H-imidazole is not blocked by alkyl groups. The imidazole ring in 1,2-dimethylimidazole is a strong nucleophile, facilitating ring-opening reactions of epoxide groups in ENR. Applicant suspects that the dimethyl substituents at positions 1 and 2 enhance the stability of the imidazolium intermediate formed during the ring-opening reaction, thereby improving the reaction rate and cross-linking efficiency, in particular in combination with carboxylic acids having chain lengths between C4-C12. The small size and low steric hindrance of 1,2-dimethylimidazole may ensure that it can easily access epoxide groups in complex ENR networks. Compared to bulkier ring opening catalysts, DMI reduces the likelihood of unwanted side reactions and undesirable and/or unexpected product properties.

It is assumed that the improved mechanical strength and the increased material flexibility of the cross-linked material upon heat treatment are primarily the result of ionic cross-links and ionic clusters. Substituted imidazoles, such as DMI or butylimidazole, in combination with a polyfunctional carbonic acid, have been observed to be more effective at inducing the formation of these ionic cross-links and clusters compared to imidazole.

According to some examples, the mixing comprises mixing the ENR, the filler and the imidazole or imidazole derivate with a polyfunctional carboxylic acid.

A "polyfunctional carboxylic acid" as used herein is an organic compound that contains two or more carboxyl groups (-COOH) within its molecular structure. In addition to these carboxyl groups, polyfunctional carboxylic acids may also have other functional groups, such as hydroxyl (*-OH*)*,* keto (-C=O), or amino (-NH2) groups, which can impart additional chemical reactivity and properties.

Adding a polyfunctional carboxylic acid to the reaction mixture may have the advantage of allowing covalent ester bonds to form between the multiple carboxylic groups of the acid with the epoxide groups of different ENR molecules, thereby creating covalent cross-links between different ENR molecules which further enhance the structural robustness of the ENR and its robustness against oxidative stress, free radicals and UV-induced degradation. In addition, the polyfunctional carboxylic acid in combination with the imidazole (or imidazole derivate) may allow the formation of indirect ionic cross-links between different ENR molecules: the positively charged imidazole(derivate) groups of different ENR molecules may form ionic bonds to the (multiple) negatively charged carboxylic groups of the acid, thereby introducing indirect ionic bonds between the different ENR molecules. "Indirect" in this context means that some ionic bonds may be formed not directly between two ENR molecules, but rather between charged groups of the acid and two different ENR molecules such that the ENR molecules are linked indirectly via the acid.

In addition, polyfunctional carboxylic acids may activate the epoxide ring by making the electrophilic carbon more susceptible to nucleophilic attack. They may act as proton donors to the oxygen in the epoxide group, thereby boosting the cross-linking rate achieved by the imidazole (or imidazole derivative) in the ring-opening process. The presence of multiple carboxyl groups ensures that the acid can participate in repeated reactions or simultaneously interact with multiple epoxide groups, increasing the efficiency of the process.

According to preferred examples, the polyfunctional carboxylic acid is a dicarboxylic acid.

For example, the dicarboxylic acid can be dodecanedioic acid, 2,2'-dithiodibenzoic acid (DTBA), oxalic acid, malonic acid, succinic acid, adipic acid, pimelic acid, sebacic acid or glutaric acid.

Using dicarboxylic acids, i.e., a polyfunctional carboxylic acid having exactly two carboxylic groups, may allow avoiding the formation of side chains. As a consequence, the sports floor component may remain more flexible compared to carboxylic acids having a higher number of carboxylic acid groups.

According to some examples, the polyfunctional carboxylic acid has a chain length from 2 to 15 carbon atoms, in particular from 2 to 12 carbon atoms.

The compact structure of carboxylic acids having less than 16 amino acids was observed to provide particularly effective cross-linking, presumably because a chain length below 16 reduces steric hindrance, allowing them to closely approach the epoxide groups. This ensures effective interaction and enhances reaction rates compared to longer-chain carboxylic acids, which may be bulkier and less reactive due to steric effects.

In particular, the polyfunctional carboxylic acid is selected from a group comprising: DTBA, oxalic acid, malonic acid, succinic acid, glutaric acid, adipic acid, pimelic acid, sebacic acid, and dodecanedioic acid.

According to a preferred example, the polyfunctional carboxylic acid has a chain length of 10 to 12 carbon atoms. In particular, the polyfunctional carboxylic acid is dodecanedioic acid (C12) or sebacic acid (C10). A combination of a polyfunctional carboxylic acid having a backbone of 10 to 12 carbon atoms, in particular dodecanedioic acid, and dimethyl imidazole has been observed to provide a particularly effective way of cross-linking ENR for manufacturing various types of sports floor components.

It was observed that short-chain dicarboxylic acids (of up to five carbon atoms), in the absence of dimethylimidazole or other imidazole derivates, have a higher cross-linking efficiency than long-chain dicarboxylic acid. However, under the presence of an imidazole, and in particular under the presence of dimethylimidazole, long-chain dicarboxylic acids of 9 to 15, in particular 10 to 12 carbon atoms, had the highest cross-linking efficiency.

Without the wish to be bound by any theory, the inventors assume that the synergistic effect in cross-linking rate and/or efficiency observed when combining long-chain acids and dimethyl imidazole can be attributed to the simultaneous formation of dimethyl-imidazolium-ENR from the ENR epoxy groups and the 1,2-dimethyl imidazole, along with hydrogen transfer between the dimethyl imidazolium and the long chain acid. Additionally, the long-chain dicarboxylic acid facilitated catalytic reduction of the reaction barrier during the formation of the dimethyl-imidazolium-ENR.

In sum, the inventors have observed that both the imidazole (or imidazole derivate) and the polyfunctional carboxylic acid can act as both a catalyst and a reactant. After initiating the ring-opening, they may covalently bond to the opened epoxide, contributing to ionically and/or covalently cross-linking in polymer networks. By combining the imidazole (or imidazole derivate) and the polyfunctional carboxylic acid, a particularly effective cross-linking of the ENR can be achieved, whereby the reversible ionic bonds may ensure that the product is still degradable and hence particularly environmentally friendly.

According to a first series of examples, ENR, imidazole and a filler (carbon black), and optionally also a carboxylic acid, was mixed to provide the reaction mixture in accordance with the following formulations:

| Example # | 1 | 2 | 3 |
|---|---|---|---|
| Acid | Oxalic acid | Dodecane dioic acid | none |
| C-atoms of acid | C2 | C12 | |
| Molecular weight M of acid (g/mol) | 90,03 | 230,30 | |
| amount m of acid (g/100g ENR) | 1,8 | 4,61 | |
| Molar amount acid (mmol) | 20 | 20 | |
| Molar amount of imidazole (mmol) | 20 | 20 | 20 |
| amount of imidazole [68,077 g/mol] (g/100g ENR) | 1,36 | 1,36 | 1,36 |
| Molar ratio imidazol:acid | 1 | 1 | - |
| Amount ENR-50 (g) | 100 | 100 | 100 |
| Filler: carbon black (phr) | 40 | 40 | 40 |

In addition, a series of further examples was prepared as follows:

| Example # | 2 | 3 | 4 | 5 | 6 |
|---|---|---|---|---|---|
| Acid | Oxalic acid | Succinic acid | Adipic acid | Sebacic acid | Dodecane dioic acid |
| C-atoms of acid | C2 | C4 | C6 | C8 | C12 |
| Molecular weight M of acid (g/mol) | 90,03 | 118,09 | 146,14 | 202,25 | 230,30 |
| amount m of acid (g/100g ENR) | 1,8 | 2,36 | 2,93 | 4,05 | 4,61 |
| Molar amount acid (mmol) | 20 | 20 | 20 | 20 | 20 |
| Molar amount of DMI (mmol) | 20 | 20 | 20 | 20 | 20 |
| amount of DMI [96.13 g/mol] (g/100g ENR) | 1,92 | 1,92 | 1,92 | 1,92 | 1,92 |
| Molar ratio DMl:acid | 1 | 1 | 1 | 1 | 1 |
| Amount ENR-50 (g) | 100 | 100 | 100 | 100 | 100 |
| Filler: carbon black (phr) | 40 | 40 | 40 | 40 | 40 |

Further examples were prepared with different molar ratios of cross-linking agent:acid, with different fillers and also with ENR-25. The mixtures were respectively mixed at 120 °C until all components were homogeneously dispersed and then cured in an autoclave at 160°C.

Then, the mechanical properties of the cross-linked ENR were examined. It was found that in general, imidazole is a more effective cross-linking agent than DMI, but if combined with a polyfunctional carbon acid, DMI was able to outperform imidazole, in particular when combined with C10 and C12 carboxylic acids. A combination of imidazole or an imidazole derivate, in particular DMI, could significantly improve the mechanical properties of cured ENR. Surprisingly, this effect was even higher for carboxylic acids having a C10 or C12 backbone than for carboxylic acids having a backbone of less than 10 carbon atoms, despite both lower reactivity and inhibition of curing reactions of the long-chain dicarboxylic acids. The inventor believes that the combination of a long-chain (C10-C12) polyfunctional carboxylic acid and DMI provides a synergistic effect by forming additional ionic bonds, resulting in a significant increase in tensile strength of the ENR-filler composites. In general, the following amount ranges can preferably be used:

According to some examples, 1H-imidazole or DMI is added to the mixture in an amount of 2-10 phr, in particular 4-5 phr (phr: weight parts of 1H-imidazole per 100 weight parts ENR). The polyfunctional carboxylic acid, e.g., Dodecanedioic acid, is added to the mixture in an amount of 4-20 phr, in particular 8-10 phr.

According to one example, DMI is added to the mixture in an amount of 5 phr, and Dodecanedioic acid is added to the mixture in an amount of 10 phr.

The product obtained with carbon black as a filler had a higher elasticity and less mechanical robustness than the products obtained when using lignin as filler, but all examples were suited for use as a sports floor component which also requires different degrees of elasticity and mechanical rigidity and robustness. The tests were repeated with lignin as a filler. It was observed that the products also had the desired mechanical properties, and improved tensile strength.

According to some examples, the polyfunctional carboxylic acid is a reaction product between an epoxidized vegetable oil and a plant-based polyfunctional carboxylic acid.

The epoxidized vegetable oil can be, for example, an epoxidized derivative of a vegetable oil selected from a group comprising: soybean oil, linseed oil, palm oil, com oil, cottonseed oil, castor oil, canola oil, rapeseed oil, tung oil, grape seed oil, peanut oil, poppy seed oil, epoxidized tongue oil, sunflower oil, safflower oil, wheat germ oil, walnut oil. In addition, or alternatively, the plant-based polyfunctional carboxylic acid is selected from a group comprising: citric acid, oxalic acid, glutaric acid, tartaric acid, succinic acid, adipic acid, malic acid, maleic acid, and fumaric acid. It is also possible to combine two or more of the above-mentioned epoxidized vegetable oils and/or to combine two or more of the above-mentioned acids.

The reaction product between the polyfunctional carboxylic acid and an epoxidized triglyceride is itself also a polyfunctional carboxylic acid, with a particularly high molecular weight (depending on the molecular weight of the carboxylic acid used as educt). The said reaction product will induce cross-linking via β-hydroxyester linkages between said reaction product and ENR molecules. Without the wish to be bound by any theory, these β-hydroxyester linkages are assumed to be reversible covalent bonds many of which will break upon heat treatment.

For example, the reaction product between the polyfunctional carboxylic acid and an epoxidized triglyceride can be made by dissolving 18 parts of citric acid in 54 parts of warm isopropanol. To this solution, 12 parts of epoxidized soybean oil were added. The isopropanol is evaporated with continuous heating and stirring (at about 87 °C). This process yielded a viscous liquid that was heated to above 120 °C to allow the epoxidized soybean oil and the citric acid to react into a high-molecular polyfunctional carboxylic acid. The reaction product was allowed to cool below 80 °C.

According to another example, 60 parts of citric acid were dissolved into 120 parts of warm isopropanol. To this solution, 40 parts of epoxidized soybean oil were added while stirring. The isopropanol was evaporated with continuous heating and stirring (above 85 °C., and preferably above 100 °C) and the citric acid and the epoxidized soybean oil were allowed to react into a high-molecular polyfunctional carboxylic acid. The reaction product was allowed to cool below 80 °C.

These examples may have the advantage of using a polyfunctional carboxylic acid which may be biobased and which may also be biodegradable. Furthermore, due to the high molecular weight of the reaction product, it will not migrate out of the sports floor component even in case no or only a few cross-links should be formed between the high-molecular polyfunctional carboxylic acid and the ENR matrix.

According to some examples, the imidazole or imidazole derivate, IMI, and the polyfunctional carboxylic acid, A, are mixed in a molar ratio IMI:A of <1.5:1.0,in particular of <1.2:1.0, in particular of ≤ 1.0:1.0, e.g., of 1:3 to 2:3, or of 0.4:1.0 to 0.6:1.0.

The polyfunctional carboxylic acid A may in particular be a dicarboxylic acid. The IMI may in particular be, for example, 1,2-dimethyl imidazole.

The inventors have surprisingly observed that the above-mentioned molar ratio provides for a particularly effective cross-linking process with a large number of cross-links formed between different ENR molecules. This observation is surprising, because given the two or more carboxylic groups per acid molecule, one would expect that a molar ratio IMI:A of 2:1 would be optimal for dicarboxylic acids to provide a similar number of positively and negatively charged groups. However, the inventors surprisingly observed that this is not the case, and that a molar ratio IMI:A of the above-specified ranges provides good or even optimal conditions for cross-linking. Without the intention to be bound by any theory, applicant assumes that in examples where both IMI and A are combined to induce ENR cross-linking, the amount of A is the limiting part for the synergistic effect of the IMI-A combination, possibly because of A being less mobile or for other reasons less capable of taking part in the reaction as catalyst or reactant than IMI.

According to embodiments, the mixing comprises mixing the ENR, the filler and the imidazole or imidazole derivate with one or more additives selected from the group comprising UV-protectants, antioxidants, and anti-ozone agents or combinations thereof.

According to embodiments, the mixing is performed at a temperature above 100°C, in particular at a temperature of 100°C to 140°C, in particular at a temperature of 100°C to 120°C. Preferably, the mixing is performed in an internal mixer. The mixing step may also be referred to as "compounding". During compounding, the ENR is mixed with the filler and various additives to create a rubber compound tailored for specific applications.

The mixture comprising ENR, the imidazole (or an imidazole derivative), and the optional polyfunctional carboxylic acid may, for instance, be a solid mixture. This is feasible because ENR, imidazole, and many polyfunctional carboxylic acids are commercially available in solid forms, such as powders or particulate matter. Preferably, a gentle mixing speed that avoids high shear forces is applied. For example, the mixing speed may be 30-50 rpm (rotations per minute) for 5 min or longer until all components are homogeneously dispersed.

After the mixture is homogeneously mixed, the mixture is cured.

According to some examples, the curing is performed at temperatures of 150 °C or higher, in particular at temperatures of 150 °C-200 °C, in particular of 150°C-180 °C, e.g., at 170 °C.

The term "curing" as used herein refers to the chemical process in which epoxide groups in ENR molecules are opened and form reversible and/or irreversible cross-links with other ENR molecules. The ring opening and cross-linking reaction may be catalyzed by a curing agent (such as imidazole or its derivatives and optionally also a polyfunctional carboxylic acid) which may also take part in the cross-linking reaction as reactant.

The curing can be performed, for example, in an extruder, in a heated mold, a heated press, or in an autoclave.

According to preferred examples, the curing is performed in an autoclave. In this case, the curing temperature may be lower, e.g., the curing may be performed at a temperature of 150°C-180 °C, in particular of 160 °C-170 °C.

According to some embodiments, the curing process may comprise creating covalent bonds between the cross-linked rubber and the lignin. For example, the lignin comprises reactive groups allowing for the formation of irreversible covalent bonds between the rubber and silanized filler (lignin and/or silica) molecules as described for examples herein. This may be beneficial as the stability and robustness of the rubber matrix with respect to UV and oxidation-induced degradation is further increased.

According to some examples, the ENR has a mole degree of epoxidation of between 20% and 60%, in particular between 40% and 60%. For example, different grades of ENR having a different extent of modification are currently available, such as ENR 25 (25 mole% epoxide) and ENR 50 (50 mole% epoxide).

The filler may provide structural support and rigidity to the sports floor component. The filler and its visual properties may also have an impact on the visual appearance of the sports floor component, which may be relevant at least for those components which are visible after installation. The filler can be or comprise, for example, an inorganic filler, in particular an inorganic filler selected from a group comprising: Chalk; Silica (Quartz Sand); Calcium Silicate; Barium Sulfate; Clay or Kaolin; Aluminum Hydroxide; Magnesium Hydroxide; Zinc Oxide; Fly Ash; Talc; Wollastonite; Perlite.

In addition, or alternatively, the filler can be or comprise a recycled, plastic-based filler.

In addition, or alternatively, the filler can be or comprise an organic filler, in particular Carbon Black or lignin.

According to preferred examples, the filler is lignin or silica.

In some examples, the filler is silanized silica or silanized lignin, wherein preferably the silanization is performed under the presence of the ENR such that covalent cross-links between the filler and the ENR molecules are formed.

Often, lignin is provided as a byproduct of the paper and biofuel industries, offering a sustainable way to upcycle industrial waste. The lignin used as filler can also be produced from wood directly as a wood-based filler. Hence, lignin is a biobased and biodegradable substance that allows to manufacture an environmentally friendly sports floor component. The lignin can in particular be Kraft Lignin.

The inventors have observed that lignin may increase thermal, oxidative and mechanical stability and the UV resistance of the cross-linked ENR, and hence of the sports floor component. Lignin has natural UV-absorbing properties, which protect the natural-rubber matrix from UV-induced degradation. Lignin increases the thermal resistance of natural rubber, making it suitable for applications exposed to elevated temperatures. It acts as a thermal stabilizer, reducing degradation during processing and prolonged use.

Additionally, lignin serves as a reinforcing filler and has been shown to improve stiffness, tensile strength, and thermal stability.

The inventors have observed that lignin possesses natural antioxidant and UV-blocking properties. These characteristics are particularly advantageous in this context, as the incorporation of lignin compensates for the inherent susceptibility of natural rubber to degradation caused by sunlight, oxidative stress (e.g., ozone, free radicals), and other environmental factors, thereby significantly extending the material's lifespan.

The combination of lignin and cross-linked ENR provides synergistic advantages with respect to robustness against abrasion and fragmentation, because lignin acts as a reinforcing filler and minimizes the generation of plastic particles during exposure to wear and tear, the sun and oxidative stressors. Hence, a high-performance alternative to conventional petro-based rubber systems in sports flooring applications may be provided.

According to other embodiments, the filler is or comprises silica.

In order to cross-link a filler that consists of or comprises silica, lignin or a mixture of silica and lignin with the ENR backbone, the filler is silanized and covalently coupled to the ENR molecules.

The silanising of the filler may be performed using a silane coupling agent. The silanized filler is then covalently coupled to the ENR molecules. The covalent coupling of the silanized lignin to the rubber can preferably be performed before a curing agent is added to the mixture or, in some examples, under the presence of a curing agent (imidazole or an imidazole derivate, optionally also a carboxylic acid), while the curing is performed.

According to some examples, the method for covalently coupling silanized filler with the ENR backbone is performed as described below. In case the filler comprises a mixture of lignin and silica, this method may be applied only to lignin, or to silica, or to both. The method may comprise the following steps:

In a first step, the filler (lignin and/or silica) is mixed with the ENR. This can be performed using equipment such as an internal mixer with a rotor and heating system or the mixing unit of an extruder. Once the filler and ENR are thoroughly combined, the temperature of the mixture is gradually increased to 50-120°C while maintaining continuous mixing.

Next, silane coupling agents are added to the mixture, and mixing is continued at elevated temperatures, typically ranging from 80°C to 180°C, depending on the specific type of silane coupling agent used. During this stage, the silanization process occurs, involving the following chemical reactions that proceed simultaneously within the silanization reaction mixture:

Silane hydrolysis: The silane coupling agents are brought in contact with water or with moisture to induce hydrolysis of the silane comprised in the silane coupling agents. Typically, the atmospheric humidity or the moisture comprised in the filler is sufficient. Thereby a silanole (a molecule having a Si-OH group) is created. For example, the hydrolysis may involve the following reaction: R-Si-(O-R)3 + 3 H2O → R-Si-(OH)3 + 3RHO.

Condensation with the filler: In this step, the silanoles obtained in the hydrolysis react with the hydroxyl groups on the filler surface. Stable siloxane bonds are formed. The siloxane bonds anchoring the silane to the filler.

Coupling step (Attachment to the rubber): In this step, the organofunctional group of the silane coupled to the filler may react with double bonds or other reactive sites of the ENR, thereby forming a covalent cross-links between the filler and the ENR molecules. At this step, preferably no imidazole or other curing agent is present. Executing the coupling reaction of the silanization before the actual curing is performed may increase the effectiveness in the subsequent curing phase. However, in some examples, the coupling reaction is executed during the heating phase of the curing process of the ENR matrix in the presence of curatives. The curative may be imidazole or an imidazole derivate, along with an optional acid.

Different types of silane coupling agents may form different types of covalent bonds with the ENR. For example, a vinyl silane can undergo free-radical addition to the ENR's double bonds. A mercapto silane can form bonds via thiol-ene addition, when the mercapto (-SH) group reacts with the rubber double bonds. The reaction conditions will depend on the type of silane coupling agent used. For example, for vinyl silanes, initiators like dicumylperoxide (DCP) or benzoylperoxide are used at 140°C to 180°C. For mercapto silanes, no initiator is required, but the mixture is heated to about 80-120°C.

After completion of the silanization, the mixture is cured. According to preferred embodiments, after the silanization has completed, the ENR-silanized-filler mixture is transferred to an autoclave, mixed with imidazole or an imidazole derivate and optionally also a multifunctional carboxylic acid, and cured.

This may ensure that the filler is immobilized through the establishment of covalent bonds between the filler and the rubber matrix. As a result, higher amounts of filler can be incorporated without the risk of it detaching from the material under heavy wear. This, in turn, enhances the mechanical stability and extends the lifespan of the sports floor component. If significant amounts of filler were to detach from the matrix, the rubber matrix could become mechanically unstable, leading to the formation of cracks. Such cracks could allow water to infiltrate the rubber matrix, accelerating material degradation through processes such as freeze-thaw cycles or by creating a moist environment supportive of microorganism growth.

According to embodiments, the filler may be a combination of two or more of the aforementioned types of fillers.

Using a filler that may be able to form some covalent links with the ENR molecules, e.g. lignin or silica, may have the advantage of providing additional strength to the material without cancelling out the desirable effects (control of degradation and material flexibility by actively destabilizing the reversible cross-links) provided by the reversible cross-links. Hence, instead of vulcanizing the ENR to increase its mechanical strength and robustness, a filler that serves as reinforcing agent and that in addition may be able to form some cross-links with the ENR was observed to be a good compromise between structural robustness and integrity on the one hand and the desirable flexibility with respect to degradation speed and material rigidity provided by the reversible cross-links.

For example, in some embodiments, the filler may basically consist of inorganic filler material and a small amount of lignin. For example, the weight ratio of lignin:rubber in the sports floor component may be in the range of 1:100 to 10:100, in particular in the range of 5:100 to 10:100. In this example, lignin primarily acts as an antioxidant.

According to some examples, the filler is lignin. The method comprises: mixing the ENR and the lignin to form an initial mixture; This initial mixture does not yet comprise the imidazole or imidazole derivate or the polyfunctional carboxylic acid; subjecting the initial mixture for at least 5 minutes at a temperature of 150°C to 200 °C under continuous mixing to provide a further mixture with increased dispersion of the lignin in the ENR ; This process may also be referred to as high temperature dynamic heat treatment (HTDHT) procedure; then, upon having completed HTDHT, the further mixture is allowed to cool to the temperature used during the following mixing step or even lower; then, the imidazole or imidazole derivative and any additional substances, (e.g., additives, polyfunctional carboxylic acid), are added to the further mixture to provide the rubber composition that is then homogeneously mixed as described at temperatures between 100 °C and 140 °C and that is then cured.

When lignin is mixed with other substances, in particular with substances being less polar than lignin, lignin agglomerates form within these other substances. These agglomerates have only a small contact area with the ENR and thereby inhibit the formation of cross-links between the ENR and the filler. Executing the HTDHT procedure on the initial mixture before adding the imidazole or imidazole derivate may have the advantage of providing a more homogeneous and fine-granular dispersion of the lignin in the ENR matrix, thereby increasing the contact interface between the lignin and the ENR. This may ease the creation of cross-links between the lignin and the ENR molecules, thereby fixing the lignin in the elastomeric ENR matrix and preventing the filler from leaving the ENR matrix upon mechanical impact and other stressors.

According to some examples, the method further comprises: subjecting the sports-floor component to a temperature of 150 °C to 250°C to break the reversible cross-links. For example, this step may be performed during installation, during use, during repair, during de-installation or after de-installation of the sports floor component, depending on the respective purpose of breaking the cross-links.

Ionic cross-links in rubber can be disrupted by subjecting the material to elevated temperatures to provide sufficient energy to overcome the ionic interactions, disrupting the cross-links. The breaking of the reversible cross-links by applying high temperatures which are not reached upon normal use of the sports floor may allow a controlled boosting of degradation, reshaping, or recycling of ionically cross-linked ENR components of a sports floor. It may also allow for temporary softening, which may be advantageous during the installation or de-installation process.

The above-specified controlled weakening or breaking the reversible cross-links allows for the controlled removal of the ENR component from other elements of the sports floor. This can be used for purposes such as controlled accelerated (bio)degradation after reaching end-of-life of the sports floor, for avoiding or reducing the generation of plastic waste. Additionally, disrupting the reversible cross-links by subjecting the sports floor to heat treatment during its use may allow the automated repair of smaller cracks which may meanwhile have formed in the rubber. Temporary disruption can also be employed to tailor mechanical properties, such as flexibility or hardness, for specific applications. For example, during the installation of the sports-floor component into a predefined cavity or depression in the base layer, the already cured and reversibly cross-linked ENR material can be heated using a mobile heating device, such as a portable electric oven or an infrared radiation source. This temporarily increases the flexibility of the material, facilitating a snug fit into the cavity or depression. Upon cooling, the reversible cross-links regenerate automatically, thereby reducing flexibility, increasing the mechanical robustness and hardness, and at the same time ensuring the material retains an excellent, secure fit within the cavity or depression.

In a further aspect, described herein is a sports floor component comprising reversibly cross-linked epoxidized natural rubber, and further comprising a filler.

According to preferred embodiments, the sports-floor component is degradable, in particular bio-degradable. The degradability may be controlled and boosted by subjecting the sports floor component to heat. Preferably, not only the ENR, but also the filler(s) used is fully degradable, in particular biodegradable. An example of a completely biodegradable filler is lignin

According to embodiments, the sports floor component is at least one of: an artificial turf infill; a component, such as a layer, of a running track; a component, such as a layer, of a tennis court; a support mat; and a shock pad; and a combination of two or more of the aforementioned components and/or of further components.

According to embodiments, the ENR in the sports floor component is covalently linked to imidazolium groups. The imidazolium groups of some ENR molecules act as cations forming ionic bonds to other ENR molecules.

According to this and/or further examples, the ENR is covalently linked to imidazolium groups and the imidazolium groups of different ENR molecules act as cations forming ionic bonds to negative carboxyl groups of a polyfunctional carboxylic acid.

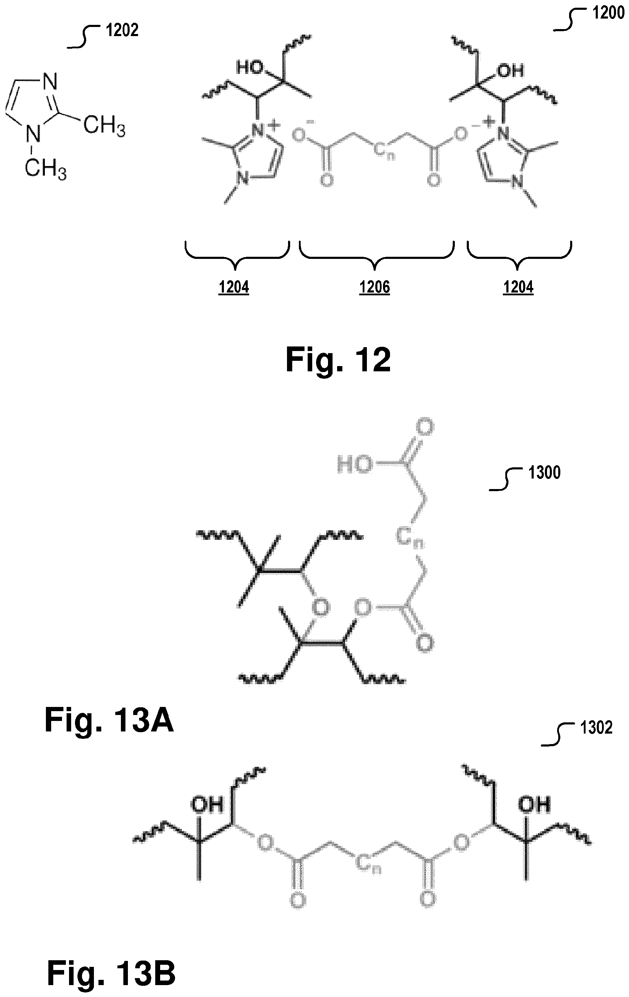

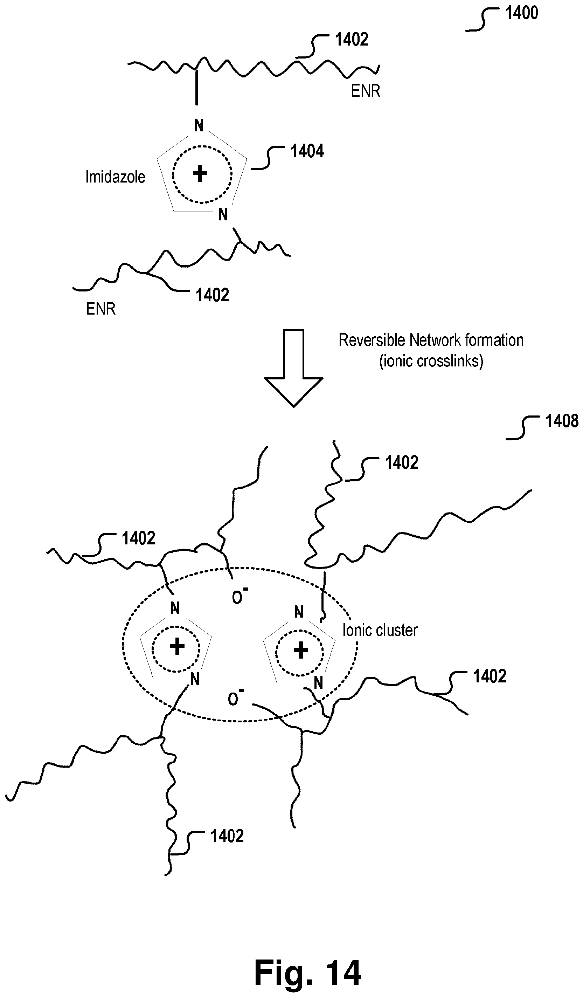

The chemical reaction between the oxirane ring of the ENR molecules and the 1H-imidazole molecule leads to the opening of the oxirane ring and to the formation of a covalent bond between one N-atom of the imidazole and a C-atom of the ENR next to the former oxirane ring. The O-atom of the former oxirane ring will become a hydroxyl group. If the remaining N-atom of the imidazole molecule triggers a ring opening reaction with an oxirane ring of a second ENR molecule, an additional covalent C-N bond will form, thereby covalently connecting two ENR molecules via the imidazole at their former oxirane rings. In addition, ionic pairs and hence reversible cross-links between two or more ENR molecules will form: the oxygen-atom of a former oxirane ring will be negatively charged, while the imidazole ring of a two-fold covalently connected imidazole is positively charged. These charges will cause the formation of reversible cross-links between two or more ENR molecules, wherein the reversible cross-links are in particular ionic bonds and hydrogen bonds. The combination of imidazole-induced, covalent and irreversible cross-links, in combination with the reversible cross-links, has been observed to provide sports floor components with good structural rigidity and robustness to decay, which in addition allow for a controlled induction or acceleration of decay, or for a controlled, temporal increase of structural flexibility. Some examples for different types of cross-links which may form are depicted in figures 13 and 14.

For example, "irreversible cross-links" as used herein refer to bonds that form permanent connections between polymer chains and are created through chemical reactions that cannot be reversed to restore the polymer chains to their original structure and composition. According to some embodiments, the creation of the irreversible bonds between NR chains involves the introduction of covalent ester bonds between ENR molecules and a carboxylic acid. The structure resulting from irreversibly chemically cross-linking the ENR chains may be characterized as a thermoset material that cannot be reprocessed or remelted, contrasting with thermoplastics. The ENR polymer chains obtained by a destruction of these ester bonds would not represent the ENR polymer chains in their original structure and composition. Therefore, these ester bonds are referred to as "irreversible".

In contrast, "reversible" cross-links are chemical connections that can break and reform under certain conditions, and may hence facilitate properties like controlled acceleration of degradation after the end-of-life, and tunable mechanical responses. When a reversible cross-link breaks, the educts having been used for creating the cross-link are regenerated, therefore the cross-link is "reversible". A "reversible cross-link" may also be referred to as "dynamic cross-link" or "dynamic bond". In particular, the formation or breaking of a reversible cross-link may be triggered by a change in one or more environmental parameter values such as temperature or stress. Reversible cross-links can be, for example, non-covalent bonds, like, for example, ionic bonds or hydrogen bonds, and in some cases also covalent bonds formed in specific reactions like Diels-Alder or disulfide exchange reactions. Although hydrogen bonds are often referred to as "interactions" in the literature, they are also classified here as "reversible cross-links." This is because, similar to reversible ionic and covalent cross-links, at least a portion of the hydrogen bonds is mediated by the reactions described herein, such as imidazole- or imidazole-derivative-mediated reactions, optionally under the presence of a polyfunctional carboxylic acid. The reversible covalent bonds formed in these special reactions remain stable for a predefined duration under typical environmental conditions at the use or installation site of the sports floor component. This predefined duration typically corresponds to the typical lifespan of the sports floor component. For instance, the lifespan may be at least 2 years or at least 5 years from the installation date. In some cases, the lifespan may range from 2 to 40 years, commonly between 5 to 20 years, or approximately 10 to 15 years. As an example, reversible covalent cross-links in artificial turf infill or other sports floor components may remain stable for at least 5 years under temperatures ranging from -20°C to +60°C. However, in some cases, the predefined duration may be shorter than the typical lifespan of the sports floor component, e.g. in cases where a predefined rate of decay is desired to allow for a continuous replacement of only parts of the sports floor component. Unlike "irreversible" covalent bonds, "reversible" bonds can be broken under stress conditions that leave the ENR or NR matrix and the filler largely intact. Such stress conditions may include extended use beyond the predefined duration or exposure to elevated temperatures or other environmental parameters exceeding those typically encountered during the normal use of the sports floor, in particular, controlled heat treatment. These conditions may degrade the reversible cross-links without immediately destroying the ENR backbone or the filler.

According to some embodiments, the matrix comprises covalent bonds between the cross-linked ENR and the filler. For example, the filler may be an organic filler like lignin comprising reactive groups such that during the creation of the irreversible covalent bonds between the ENR molecules, also covalent bonds between the ENR and the lignin molecules are formed. This may be beneficial as the stability and robustness of the ENR matrix with respect to UV and oxidation-induced degradation is increased.

Lignin is polar, while natural rubber is apolar, resulting in suboptimal interfacial compatibility between these two molecule types. However, the inventors have observed that interfacial compatibility can be improved by using epoxidized natural rubber (ENR) instead of non-epoxidized natural rubber (NR). The presence of polar epoxy groups (and any optionally grafted polar functional groups) in ENR makes it more polar than NR, enhancing compatibility with lignin.

The sports floor component may be designed for either indoor or outdoor applications. The combination of reversibly and optionally also irreversibly cross-linked ENR with lignin is particularly advantageous for outdoor use, as it offers enhanced robustness against elevated UV exposure, temperature fluctuations, and oxidation-induced stress. This improved durability makes it especially suitable for environments subject to harsh weather conditions and prolonged sunlight exposure.

The use of lignin as a filler is particularly advantageous when the artificial sports floor component is artificial grass infill, and a natural look and feel for the grass is desired. Lignin's dark brown color closely resembles soil, allowing the infill to replicate a natural appearance. However, for colored sports surfaces or sports floor components that remain visible, a lighter filler, such as chalk, is preferably used to achieve the desired aesthetic.

According to embodiments, the lignin is selected from a group consisting of Kraft lignin, Magnesium Lignin and Sodium Lignin. Preferably, the lignin is Kraft lignin.

Lignins are complex, three-dimensional polymers produced by vascular plants and play a key role in providing structural integrity to plant fibers.

Kraft Lignin is a type of lignin that is derived from wood pulp processes, specifically the kraft process. It is a significant industrial lignin type available in large quantities. Kraft lignin typically exhibits a glass transition temperature (Tg) around 153°C and has a relatively low molecular weight (typically below 4000 Da, e.g., 2300 Da).

Magnesium Lignin (Mg-Lignin) is the magnesium salt of lignosulfonic acid, which is more basic in nature. It has a higher molecular weight (e.g., 6200 Da) and a lower Tg (-26°C) compared to kraft lignin.

Sodium Lignin (Na-Lignin) is a sodium salt of lignosulfonic acid. Its molecular weight is also higher (e.g., 7000 Da), and it shows a Tg of about -27°C, indicating a more flexible structure at lower temperatures.

These lignins can have varying effects and functionalities when used as fillers or additives in different polymer matrices, such as rubber, primarily due to their distinct chemical structures and physical properties. The inventors have observed that kraft lignin shows superior reinforcing capabilities compared to the other two types. Without the wish to be bound by any theory, Kraft lignin is assumed to show the best performance due to its basic nature, enhancing the sulfur cross-linking reaction compared to the acidic Mg- and Na-lignin. Due to its complex structure and high molecular weight, achieving uniform dispersion of lignin in the NR (or ENR) matrix can be difficult. Improved dispersion can help ensure consistent and uniform mechanical properties throughout all parts of the sports floor component.

Furthermore, the kraft pulping process introduces a higher concentration of phenolic hydroxyl groups in lignin compared to other lignin extraction methods. These groups form hydrogen bonds with the NR (or ENR) matrix, improving the interfacial adhesion and stress transfer between lignin and the rubber.

According to some embodiments, the sports floor component comprising the lignin does not need any additional UV-protectant additives and/or anti-ozone agent additives, and hence may be free of a UV-protectant additive and/or may be free of an anti-ozone agent additive. Lignin enhances the stability of rubber under thermal oxidative aging, attributed to its phenolic structure that can act as an antioxidant.

ENR is one of the modified rubbers derived from natural rubber. The modification process is done by introducing oxygen atom to the unsaturated molecule of natural rubber. This chemical reaction produces an oxirane or epoxide compound that consists of a three-membered ether in a cyclic form. Various grades of ENR can be used depending on the extent of modification desired. For example, ENR 25 (25 mole% epoxide) and ENR 50 (50 mole% epoxide) are available on the market. ENR is NR that has been chemically modified to include epoxide groups, enhancing its resistance to thermal and oxidative degradation. While ENR offers improved properties compared to untreated natural rubber, it still experiences some aging and degradation over time, primarily driven by similar mechanisms as those affecting conventional natural rubber (ENR, like NR, comprises unsaturated bonds).

The use of ENR in combination with lignin has been observed to be particularly beneficial, because the epoxide groups in ENR make the NR more polar, thereby facilitating interaction and adhesive forces between the rubber matrix and the polar filler lignin.

In order to prevent or reduce the aging induced by heat, UV radiation, ozone, oxidants and high temperatures, various additives may be added to the ENR-filler mixture that have been mentioned here already as optional additives for the ENR - filler mixtures (e.g., antioxidants, UV-protection agents, anti-ozone agents, etc.). The formation of cross-links between epoxidized natural rubber molecules may also help prevent degradation.

According to some embodiments, the sports floor component is coated with a waxy barrier layer. For example, the waxy barrier layer can be made of paraffin waxes, in particular fully refined paraffin waxes with a melting point in the range of 50°C to 65°C. Paraffin Waxes are saturated hydrocarbon waxes which have good film-forming properties, and are well suited for providing a protective barrier against ozone and UV.

In other embodiments, natural waxes such as carnauba wax or beeswax are used. These biobased, natural waxes provide eco-friendly alternatives to synthetic options while offering excellent protective properties.

In some examples, the waxy barrier layer is created by applying the wax to the sports floor component as a final manufacturing step. For instance, the wax can be sprayed, painted, or otherwise applied to the surface of the component. Alternatively, the wax may be incorporated into the rubber- filler compound prior to the introduction of covalent cross-links. In this approach, wax molecules migrate to the surface during use of the sports floor component, forming a waxy protective layer automatically. This method offers the added advantage of a self-renewing protective layer, as new wax molecules migrate to the surface to replace those that are abraded over time, ensuring continuous protection of the sports floor component.

According to embodiments, the sports floor component further comprises one or more additives comprising at least one of: a plasticizer, in particular bio-based oil; a UV-protectant; a thermal stabilizer; an antioxidant; and an anti-ozone agent; and a combination of two or more of these additives. These additives may further increase the robustness of the rubber matrix against decay and a loss of elasticity and structural integrity induced by UV radiation, free radicals, ozone, oxidizing agents and high temperature, thereby increasing the lifespan of the sports floor.

The antioxidant can be, for example, an amine antioxidant, in particular para-phenylenediamine. In addition, or alternatively, the antioxidant is a phenolic antioxidant.

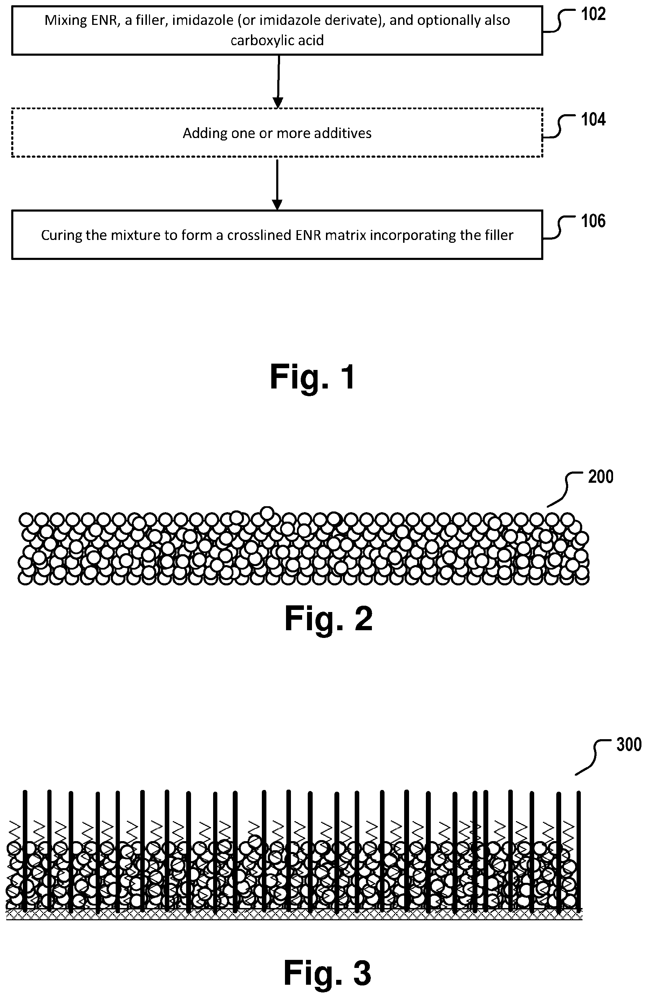

Figure 1 is a flow chart of a method of manufacturing a sports floor component made of ENR matrix comprising the filler, wherein the ENR molecules in the network are linked via covalent, irreversible cross-links and via reversible cross-links. The reversible cross-links are in particular ionic bonds and hydrogen bonds. The reversible network allows to exert control on the network structure and hence on the material rigidity and susceptibility to decay even after the manufacturing process has been accomplished.

The filler can be lignin, and the lignin can be, for example, kraft lignin which is a byproduct of the kraft pulping process. It is a complex, aromatic polymer derived from wood, primarily used in papermaking, and is typically sold as a dry powder, or granules. Optionally, the filler is combined with a plasticizer, e.g., a mineral oil or, preferably, a plant-based oil, and is then milled. This step may be particularly advantageous when the filler is lignin. The milling of the lignin with the plasticizer may be beneficial because it may ease the dispersion of the lignin in the rubber matrix.

The ENR is commercially available in different degrees of epoxidation. For example, a molar 50% epoxidized rubber may be used. For example, the product Epoxyprene, Muang Mai Guthrie PCL, may be used as the 50% epoxidized rubber.

For example, the mixture may comprise 20-50 % by its weight the ENR, and 50-70% by its weight the filler (e.g. lignin). The rest of the mixture may consist of the one or more imidazoles or imidazole derivatives, and optional components such as the polyfunctional carboxylic acid(s) and/or one or more additives. The imidazole(s) or imidazole derivate(s) may be added, according to one example, in an amount of more than 1 phr, e.g., 5 phr to 20 phr, wherein phr refers to weight part per 100 weight parts ENR.

The imidazole component may be a combination of different imidazoles. For example, a combination of 1-butyl-imidazole (IntraChem Limited, also available e.g. from Sigma-Aldrich) and 1H-imidazole (2M-SOLUTION GmbH, also available e.g. from Alfa Aesar) was used in one example. The butyl-imidazole was added in an amount of 4 phr (weight parts per 100 weight parts ENR), and the 1H-imidazole (H) was added in an amount of 6 phr.

Next, in step 102 the filler, the imidazoles and the ENR were mixed at moderate speed, e.g., 50 rpm rotor speed in a mixer to form a mixture that is also referred to as "rubber composite", "reaction mixture" or "mixture". Optionally, the temperature may be increased moderately, e.g., to a temperature in the range of 25°C to 50°C, to ease the mixing and dispersion of the components. The mixer can be, for example, a two-roll mill or an internal mixer (e.g., Banbury mixer). Preferably, the filler is added gradually and in powder form into the rubber to ensure uniform dispersion to avoid clumping and ensure effective reinforcement.

In an optional further step 104, one or more polyfunctional carboxylic acids and/or one or more optional additives may be added to the mixture. The steps 102 and 104 may also be executed simultaneously, meaning that all components of the mixture may be added simultaneously. The additives may comprise, for example, UV-protection agents, antioxidants, pigments, anti-ozone agents, or combinations thereof. The additives may be incorporated into the mixture while maintaining continuous mixing to ensure uniform dispersion and achieve a homogeneous composition.

In a further, optional step, the mixture may be brought into a desired shape before the mixture has completed curing. For example, the mixture can be passed through a two-roll mill or an extruder to form sheets of desired thickness. For specific applications (e.g., some types of shock pads), the mixture may be molded into shapes using compression or injection molding.

The mixing is preferably executed at a temperature above 100°C, in particular at a temperature of 100°C to 140°C, in particular at a temperature of 100°C to 120°C. In the above-specified example, a temperature of 110°C was used.

Next in step 106, upon having achieved a homogeneous mixing of the components, the mixture may be transferred into a different container or form or device for the curing step. For example, the mixture may be transferred to an autoclave. The mixture is then cured by increasing the temperature of the mixture to a temperature to 150°C or higher, in particular at a temperature of 150°C to 180°C. In the above-specified example, a temperature of 165°C was used. After 5-20 min of curing time, a sports floor component is obtained that comprises an ENR network, wherein at least some of the cross-links of the network are reversible cross-links. The lignin is incorporated in the ENR network. The lignin molecules will also form reversible cross-links with the ENR molecules in the form of hydrogen bonds. In case the lignin was silanized, it may also form covalent bonds with the ENR molecules.

According to some examples, for executing the curing step, the mixture can be placed between heated plates and compressed. The mixture could also be put through an extruder that heats the mixture as it is extruded. In some embodiments, the curing step comprises placing sheets of the mixture or the molded form of the mixture into a heated press. The press is preheated to the required curing temperature (typically 150 °C-180 °C). The mixture is cured by applying heat and optionally slight pressure to the material for a curing time that may depend on the thickness and formulation of the sports floor component.

According to other embodiments, the curing process is performed in an autoclave. In the autoclave, the mixture is exposed to saturated steam under pressure. These conditions induce the formation of the reversible and irreversible cross-links, whereby the saturated steam acts as an inert gas, facilitating better heat transfer and allowing for higher curing temperatures and shorter cure times compared to traditional methods.

The inventors have observed that curing the mixture in an autoclave is particularly advantageous for manufacturing sports floor components, because shorter cure times and lower temperatures may be used, which may reduce the overall heat exposure time to minimize any potential damage to the ENR. As mentioned above, ENR is more sensitive to heat and other stressors than petro-based rubber like EPDM. The pressure for curing ENR in an autoclave can be, for example, around 0.3 to 0.7 MPa (approximately 43.5 to 101.5 psi). The curing temperature in the autoclave ranges from 150°C to 180°C, in particular 150°C to 170°C, with cure times varying based on the thickness and type of the rubber compound. For section thicker than 10 mm, preferably a time cycle of 15 to 90 minutes is used. In addition, autoclaves can handle large volumes of the same or different products simultaneously, provided that the curing agents do not interact negatively. This is particularly advantageous for producing large sports floor components or components having complex shapes that may not be suitable for conventional molds.

The reversibly cross-linked mixture is a solid and typically elastic material that is much more robust against UV, oxidative stress or ozone than the ENR before it was subjected to the cross-linking reaction. If lignin is used as filler, the resulting reversibly cross-linked ENR network is also much more robust against the above-mentioned environmental conditions than ENR without a filler or with a filler being not lignin.

In order to complete manufacturing of the sports floor component, additional steps may be executed depending on the type of the component. For example, if the sports floor component to be manufactured is artificial turf infill, the reversibly cross-linked ENR matrix is granulated. For example, the solid ENR matrix may be cut, shredded or ground to provide the artificial turf infill. The artificial turf infill may be then used to manufacture an artificial turf as it is illustrated in figure 3.

In other embodiments, the cured ENR mixture is granulated and mixed with a binder, e.g., a PU-based binder, to form a shock-pad, an elastic support layer, a running track layer, a playground layer, or other type of sports-floor component.

In still other embodiments, the curing process may be performed within a form having a predefined shape, or the already cured mixture may be cut or otherwise processed to adapt the predefined shape, and the cured mixture having the desired shape may then directly be used as the sports floor component, e.g., a support mat or shock pad, or may be combined with (e.g., glued to) other materials or layers of materials to form the sports floor.

The granulate and its surface typically consists of both filler components and cross-linked ENR. The uniform distribution of the filler within the matrix formed by the cross-linked ENR ensures an approximately homogeneous distribution of the filler in the granulate and on the surface.

The method may optionally include manufacturing and/or installing a sports floor comprising the sports floor component, wherein the method involves combining the cured sports floor component with other components to create the sports floor. For instance, the cured sports floor component can be used as infill, which is added to an already installed artificial turf system, thereby forming an artificial turf 300 as illustrated in Figure 3. The rubber-filler-based infill can also be mixed and/or combined with other types of infill, such as sand or plant-based infill materials, including olive pit particles, cork, hemp, rice hulls, or similar materials.

In a further optional step, the surface of the cured mixture receives a surface treatment with a waxy coating. A wax is applied as a protective barrier to improve UV and ozone resistance. The waxy layer can be sprayed, brushed, or automatically formed if wax was included in the compound.

Tensile measurements were performed using a Zwick 1456 tensile tester (ZwickRoell GmbH, Ulm, Germany). Different types of sports floor components have different requirements or optima for the tensile strength. By adapting the curing time, the degree of cross-linking and hence the degree of tensile strength can be adapted to the requirements of the individual type of sports floor component.

In order to test the effect of destabilizing the reversible ENR network in a controlled manner, various samples of a support mat were manufactured based on the above-specified manufacturing process using DMI and dodecanoic acid and lignin as filler. The support mats were allowed to cool after the curing process and the tensile strength was measured. Then, the support mats were heated to 120 °C in an oven for 20 minutes. Then, within 2 minutes after this heat treatment, when the material was still hotter than 90 °C, the tensile strength was measured a second time. It was observed that the heating had reduced the tensile strength significantly, typically in a range of 35 % - 90 % compared to the values obtained in the initial measurement. In this state, the material was particularly susceptible to induced breakage and decay induced by mechanical shear forces, and it was also less rigid and hence could be reshaped more easily, which may be beneficial in the context of installation and de-installation. Then, the material was allowed to cool to room temperature. After 3 hours at room temperature, the tensile strength was measured a third time. It was observed that the material significantly increased its tensile strength, but a full recovery was not observed. The mixture is preferably free of a sulfur or similar vulcanization agents as these agents would generate ENR molecule networks whose properties are dominated by irreversible covalent cross-links.

Figure 2 illustrates a sports floor component in the form of infill 200. Artificial turf infill is a granular material used to fill the space between the fibers of artificial turf systems, providing support, cushioning, and stability. Infill enhances the performance and safety of the turf by improving shock absorption, reducing wear, and mimicking the feel of natural grass. Common applications include sports fields, playgrounds, and landscaping.

Figure 3 illustrates artificial turf 300 comprising the infill 200 shown in figure 2. The infill 200 may be the only infill of the turf. In other embodiments, it is combined with one or more other infill types such as plant-based infill material made e.g. from wood, cork, olive pits, hemp, sisal, or zeolite-based infill, or sand. The combination of two or more infill materials may be a mixture of infill granules of different types, or may have a layered structure. For example, sand can be used as a stabilizing layer and the natural rubber-filler based infill could be used as performance infill layer placed on top of the stabilizing layer.

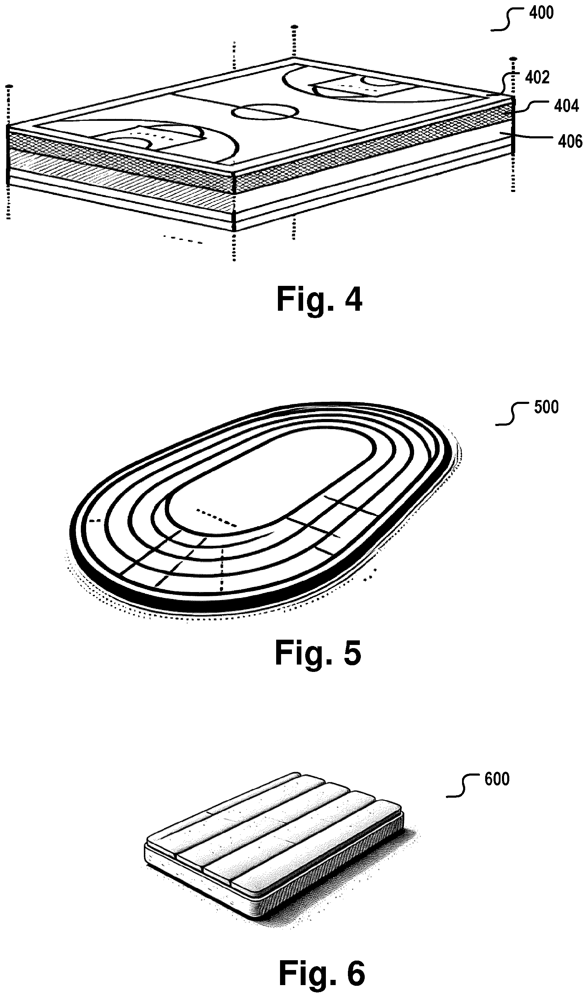

Figure 4 illustrates a sports floor component configured as a support layer 406 within a sports floor system 400. The sports floor system 400 can be, for example, a soccer or handball field. The system 400 may comprise multiple layers:

The playing surface layer 402 provides the primary interface for athletes, ensuring grip, comfort, and durability. Depending on the required performance characteristics, such as shock absorption, ball bounce, and wear resistance, the materials of the playing surface layer may be, for example, polyurethane or acrylic coating (e.g. for indoor courts sch as basketball or badminton), synthetic turf or rubber for landscaping, playgrounds or multi-sport surfaces.

The support Layer 404 may have the function of a shock absorption layer. It absorbs and distributes impacts, reduces stress on athletes' joints and muscles, and enhances the lifespan of the top layer.

The support layer 404 and/or the playing surface layer 402 may be made of a reversibly cross-linked ENR matrix comprising a filler.

The support layer 404 is not visible, so the color of the filler is irrelevant. Hence, for the support layer 404, bright fillers (e.g. chalk or kaolin) and dark fillers (e.g. lignin) may be used. However, for the visible playing surface layer 402, a bright infill is typically preferred to ensure that the color of the filler does not alter or darken the intended color of the sports floor. For example, one of the following fillers having a white or bright color may be chosen for sports floor components required to have a bright or at least not dark color: Calcium Carbonate (Chalk), Zinc Oxide, Aluminum Hydroxide, Magnesium Hydroxide, Silica (Fumed or Precipitated), Talc, Gypsum (Calcium Sulfate), Wollastonite, Calcium Silicate, Barium Sulfate, Kaolin (White Clay).

The base layer 406, also referred to as foundation, ensures a level, firm surface to support the upper layers. It is commonly made of concrete or asphalt for outdoor applications, or engineered plywood or particleboard for indoor sports floorings.

Figure 5 illustrates a sports floor in the form of a running track 500. The topmost layer, the running surface layer, and/or a support layer below this topmost layer, may be made of an a reversibly covalently cross-linked ENR matrix comprising a filler. As mentioned with respect to figure 4, for layers of the running track which are not visible, the color of the filler is irrelevant. Hence, for the support layer of the running track, bright fillers (e.g. chalk or kaolin) and dark fillers (e.g. lignin) may be used. However, for the visible surface layer of the running track, a bright infill is typically preferred to ensure that the color of the filler does not alter or darken the intended color of the running track.

Figure 6 illustrates a sports floor in the form of a shock pad 600. A shock pad as used herein is a cushioning layer or cushioning tile installed beneath the surface material (e.g., artificial turf, rubber tiles, or synthetic flooring) or used as the topmost surface layer. In the latter case, a shock pad is often also referred to as impact protection layer and used e.g. for playgrounds. Its primary function is to absorb impact, enhance safety by reducing the risk of injuries from falls, and improve surface performance by providing shock absorption, energy return, and uniform support. A shock pad may be made completely or partially from the reversibly cross-linked ENR further comprising the filler. The filler can be, for example, an inorganic filler, a synthetic or recycled filler, and in particular a plant-based filler like lignin. Optionally, it may comprise additional materials like foam, cork, or composites and are designed to meet specific safety and performance standards for sports applications, including recreational applications. The additional materials may be co-extruded or glued or otherwise attached to the ENR matrix.

It should be noted that in addition to the reversible ionic cross-links, also some covalent and irreversible cross-links between the ENR molecules may have formed for the embodiments and examples described herein. A high amount of the imidazole or imidazole derivate tends to increase the share of the reversible cross-links.

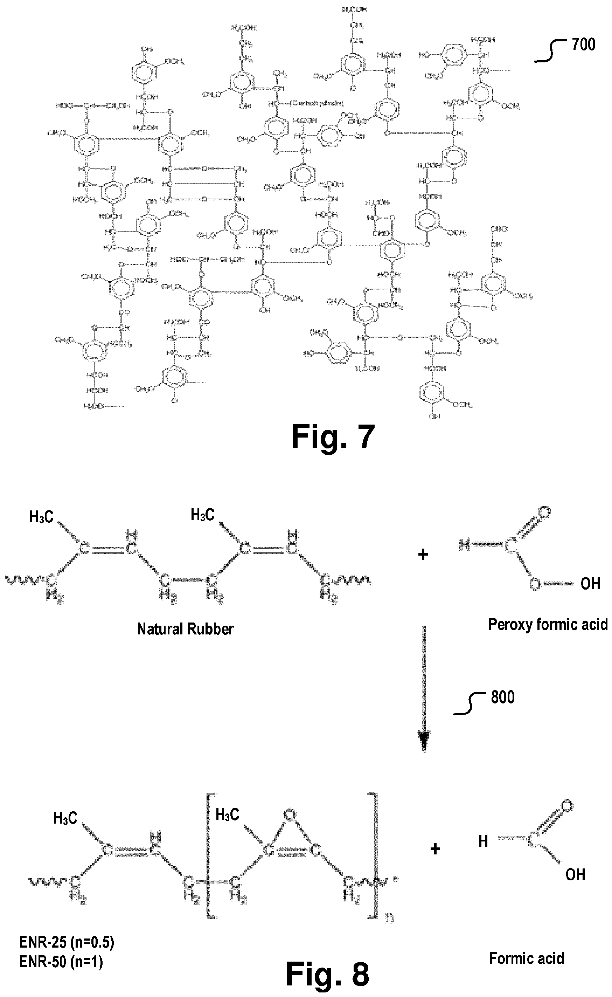

Figure 7 illustrates the structure of lignin from a softwood. As can be inferred from the figure, Lignin is a complex, amorphous biopolymer composed of phenylpropanoid units, linked by various chemical bonds, including ether (C-O-C) and carbon-carbon (C-C) linkages. Its irregular, highly branched structure contains abundant aromatic rings and hydroxyl groups, which contribute to its rigidity and thermal stability. Additionally, lignin's complex, high-molecular-weight structure improves thermal stability and its inherent antioxidant properties protect the NR (or ENR) from oxidative degradation.

Figure 8 illustrates the epoxidation reaction of natural rubber. All examples described herein may be made with epoxidized natural rubber (ENR) instead of natural rubber.

The epoxidation reaction of natural rubber involves introducing an oxygen atom to the double bonds of natural rubber (cis-1,4-polyisoprene).

This chemical reaction produces an oxirane or epoxide compound that consists of a three-membered ether in a cyclic form. For example, ENR 25 (25 mole% epoxide) and/or ENR 50 (50 mole% epoxide), which are commercially available, can be used as the epoxidized natural rubber before it is further processed (e.g., mixed with the imidazole or imidazole derivate and optionally other substances and cured).

As illustrated in figure 8, an organic peracid (e.g., peroxy formic acid or peracetic acid) is mixed with natural rubber. Peracids react with the double bonds in the polyisoprene chain, forming three-membered epoxide rings at the site of the double bond. This induces a replacement of double bonds in the polyisoprene chains by epoxide groups. Acidic or basic catalysts (e.g., sulfuric acid or ion-exchange resins) are preferably used to control the reaction.

Epoxidized natural rubber may provide the advantage of increased resistance of the resulting natural rubber-based sports floor component against many kinds of chemicals (oils, oxidants, free radicals, ozone) both because of chemical and physical aspects: the epoxidized natural rubber has an increased chemical resistance to said substances. In addition, epoxidized rubber exhibits lower permeability to gases, thereby preventing the contact with ozone, free radicals and other gaseous substances which might react with the rubber molecules and induce a decay of the rubber material.

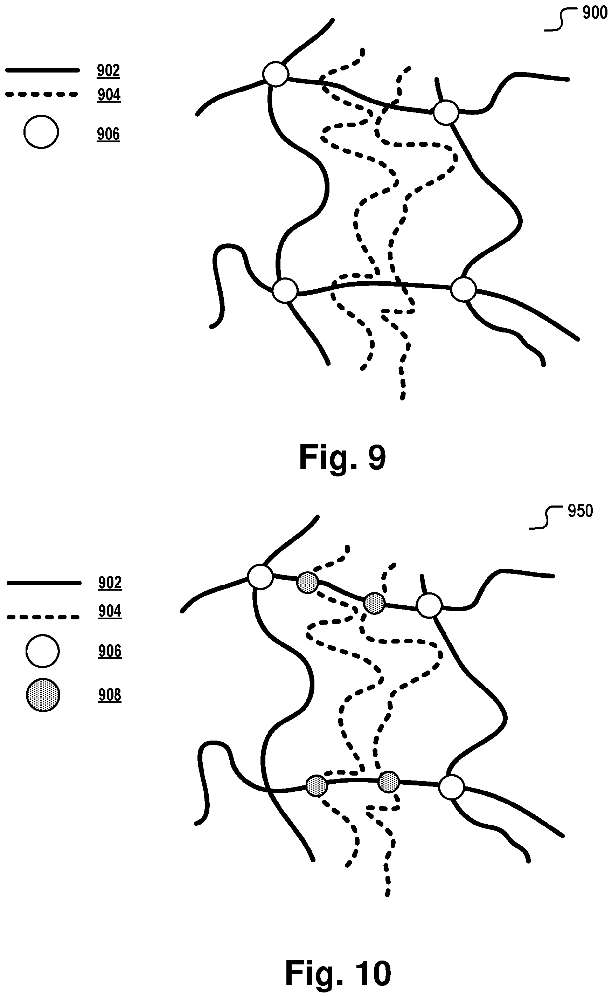

Figure 9 illustrates a matrix 900 of cross-linked ENR molecules 902. Figure 9 also shows a filler molecule 904. The lines 902 may represent the polyisoprene backbone of ENR. In an imidazole-mediated reaction, reversible ionic cross-links and also some covalent cross-links are formed between different ENR chains. The result of the cross-linking reaction is the three-dimensional matrix depicted in figure 9, where multiple different ENR chains 902 are reversibly and sometimes also irreversibly interconnected, forming a highly elastic network.

Figure 10 illustrates a matrix 950 of cross-linked ENR molecules 902 which are in addition cross-linked with the filler molecules 904. Whether additional cross-links between the ENR molecules and the filler molecules 904 will form may depend on the type of filler used. The ENR-filler cross-links are mainly hydrogen bonds. If lignin and/or silica is used as a filler, this may allow also covalent cross-links also to form between the ENR and the lignin or silica, thereby further increasing the robustness of the resulting cross-linked material against heat, UV-light and other stressors. However, for some types of fillers, in particular some inorganic fillers, no covalent cross-links between the ENR molecules and the filler molecules will form. Hence, the figures 9 and 10 merely serve to illustrate that the cross-linking reaction will create additional cross-links at least between the ENR polymer chains, and optionally also to the filler molecules (in particular when lignin or silica in combination with a silane coupling agent is used as filler or as components of the filler).

According to some embodiments, e.g. the embodiment depicted in figure 10, the reaction parameters are chosen such that a particularly high cross-link density is reached. This results in greater robustness against degradation, and in increased rigidity. For example, a polyfunctional carboxylic acid may be added to the reaction mixture, which synergistically enhances the cross-linking effectiveness of the imidazole or imidazole derivate.

During the imidazole-mediated cross-linking reaction, reversible cross-links in the form of hydrogen bonds may also be formed between lignin and ENR. The presence of these additional ENR-lignin cross-links 908 leads to improved interfacial adhesion, which reinforces the ENR matrix.

Rubbers have an optimum range of cross-link density for their practical usage. The cross-link level has to be high enough to prevent fracture due to viscous flow but low enough to avoid brittleness. The degree and type of cross-links depend on the type and amount of the imidazole(derivate(s)) used, and on the type and amount of the optional polyfunctional carboxylic acid.

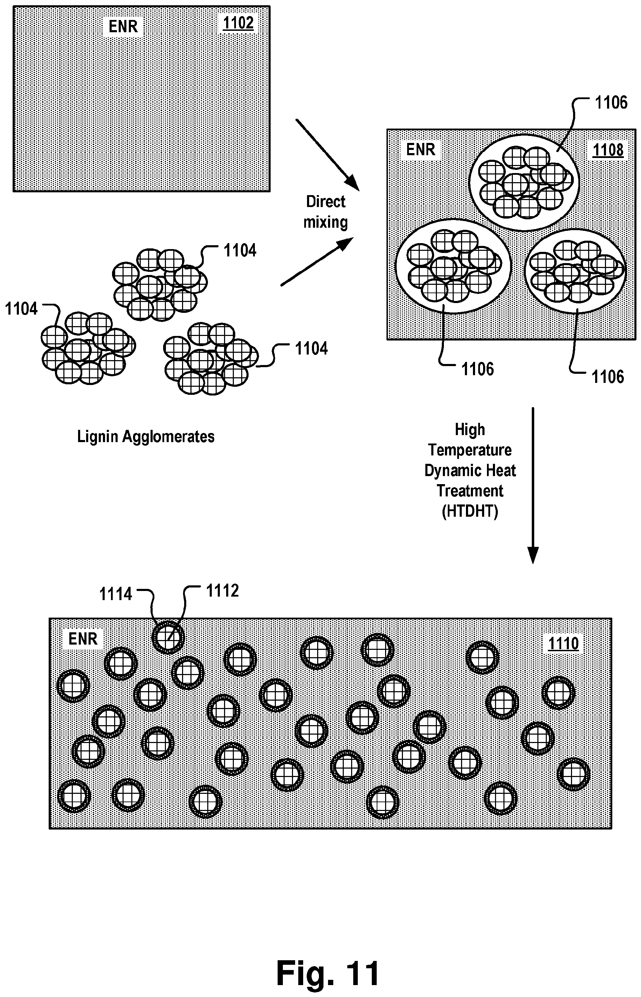

Figure 11 illustrates a high temperature dynamic heat treatment (HTDHT) procedure applied on an ENR-lignin mixture.

Lignin is a macromolecule with a strong tendency to form lignin-agglomerates 1104 when lignin is mixed with other substances. For example, when lignin is mixed with ENR, a mixture 1108 of ENR and lignin agglomerates may be formed. In this mixture 1108, which may also be referred to as "initial mixture", the contact interface between the lignin agglomerates 1104 and the ENR mass is small, because the agglomerates are comprised in cavities 1106. However, the small amount of contact interface area is a strong obstacle for the formation of cross-links between the lignin and the ENR molecules. However, these cross-links are important for the ability of lignin to protect the ENR from sunlight, oxidants, ozone, radicals and other harmful factors, as these cross-links stabilize the overall structures of the NER elastomeric matrix.

The inventors observed that by subjecting the mixture 1108 to a High-Temperature Dynamic Heat Treatment (HTDHT), lignin can be efficiently dispersed into the ENR matrix. Thereby, the lignin agglomerates are dissolved into smaller aggregates or individual molecules, and the contact surface between the lignin and the ENR is strongly increased. This is illustrated in figure 11 via the mixture 1110 which is obtained by subjecting the mixture 1106 to the HTDHT treatment: the individual lignin molecules or small lignin agglomerates 1112 are homogeneously dispersed in the ENR matrix, whereby the contact interface 1114 between lignin and rubber is greatly increased and the volume of the cavities is greatly reduced. As a result, the number of cross-links between the lignin and the ENR, which can be generated through an imidazole- or imidazole-derivative-mediated cross-linking reaction, may be significantly increased..

Applying the HTDHT on the mixture 1108 of lignin and ENR may comprise heating the mixture to a temperature of 150 °C to 200 °C while the mixture is constantly mixed. The mixing is preferably performed using high-shear mixing equipment, such as a Banbury mixer, two-roll mill, or an internal mixer. The high mechanical shear ensures uniform dispersion of lignin in the rubber matrix. Optionally, moderate pressure is applied, to enhance mixing efficiency. The mixing time is preferably in the range of 5 to 15 minutes, depending on the material viscosity and desired dispersion level. Prolonged mixing may improve the dispersion, but can lead to overheating or degradation.

According to one example, a mixing speed in a Banbury mixer of 50-100 rpm or higher is applied. Higher speeds improve dispersion but may require cooling to prevent excessive heat buildup.

According to some embodiments, the lignin is pre-processed to reduce the size of the agglomerates. For example, the lignin may be ground into fine powder, chemically modified, and/or mixed with a plasticizer, in particular oil, to enhance compatibility with the rubber matrix.

The HTDHT treatment was observed to promote dispersion of lignin in the rubber matrix and to increase the interfacial surface between lignin and rubber, thereby improving mechanical properties and thermal stability of the resulting product.

According to one example, the mixture 1110, after the HTDHT treatment is completed, is provided as the mixture generated in step 102 of the method illustrated in figure 1. The mixture 1110 may be mixed with further additives and with imidazole or imidazole derivates to induce the curing reaction of step 106.

Figure 12 illustrates a network 1200 comprising reversibly and irreversibly cross-linked ENR molecules, where the cross-links are induced by dimethylimidazole 1202 and a polyfunctional carboxylic acid 1206. As detailed above, imidazole or its derivatives, particularly dimethylimidazole, can react through both of its nitrogen atoms with separate ENR molecules, forming covalent bonds that cross-link the molecules (e.g., see molecule 1400 in Figure 14). Additionally, some imidazole or imidazole derivative molecules may react through only one of their nitrogen atoms with an ENR molecule, resulting in an ENR molecule containing an imidazolium group 1204. The imidazolium group is positively polarized or charged, facilitating the formation of reversible ionic bonds with negatively polarized or charged carboxylic anions present in the polyfunctional carboxylic acid 1206, which is also added to the mixture. These ionic bonds form a reversibly cross-linked ENR-network 1200.

Fig. 13 illustrates ester cross-links between ENR molecules and a carboxylic acid molecule and an ether cross-link between different ENR molecules. When ENR reacts with a dicarboxylic acid and dimethylimidazole, three different networks may be generated: an ionic network 1200, 1408 illustrated in figures 13A and 14; a β-hydroxy ester 1302 illustrated in figure 13B; and an ether linkage 1300 directly connecting two ENR molecules as illustrated in figure 13A.

Figure 14 is an illustration of a further type of reversible ionic ENR molecule cross-linking. The reversibility of the ionic cross-links allows to exert control on the ENR network structure even after the sports floor component was manufactured, e.g., for temporarily destabilizing the network and increasing material flexibility or the susceptibility of the material for decay during installation, maintenance, de-installation or recycling.

1H-imidazole 1404 comprises reactive 1 and 3 nitrogen atoms which will react with the oxirane ring of ENR at higher temperatures ("curing step"), leading to an ENR-molecule network 1400 comprising a positively charged imidazole 1404 covalently linked to ENR molecules 1402 as illustrated in the upper part of figure 14. In addition to the covalent cross-links, a higher-order ENR network 1408 forms reversibly based on ionic cross-links (and hydrogen bonds, not shown). For example, multiple positively charged imidazole groups and anions, e.g., alkoxide counter-anions, will form ionic clusters. Some ENR molecules will be covalently bound to the imidazole groups in the cluster while other ENR molecules will be reversibly ionically linked to positive or negative ions comprised in this cluster, thereby reversibly forming a higher-order ENR molecule network.

The inventors have further observed that the network structure 1408 may be further strengthened by fillers having polar groups such as lignin or functionalized silica, which also reversibly form hydrogen bonds with the rubber molecules and with the ionic clusters. This may on the one hand prevent the filler from leaving the ENR matrix during use of the sports floor, and it may also ease the degradation of the sports floor component at the end of its lifetime: if the filler is an inorganic filler, the controlled and induced destruction of the reversible cross-links may mechanically destabilize the ENR-filler compound, thereby easing the degradation of the ENR matrix. For example, it will become more easy for water and microbes comprised therein to penetrate the ENR matrix if the matrix is less tightly bound to the filler after the destruction of the reversible bonds. In case the filler is an organic, biodegradable filler, e.g., lignin, the controlled and induced destruction of the reversible cross-links will also accelerate the biodegradation of the organic filler. This may be highly useful for controlled induction of biodegradation of the sports floor component or parts thereof at the end-of-life of the sports floor.

Due to the non-neutralization of the positive charge in the imidazolium cation, it is possible for the imidazolium cation and the alkoxide anion to form ionic pairs and then form ionic clusters initially. Furthermore, the opening of the oxirane ring results in the formation of a hydroxyl group. These hydroxyl groups can form hydrogen bonds to ENR molecules.

Applicant assumes that the network 1408 that is reversibly formed can be broken down e.g. by applying heat, but can automatically regenerate presumably because the ionic groups can diffuse and reorientate freely in the ENR matrix, resulting in the new formation of clusters and the new formation of the higher-order network 1408.

By mixing and curing ENR with an imidazole derivate and a polyfunctional carboxylic acid, typically a mixture of different reversible and irreversible cross-links such as those illustrated in figures 12-14 is formed. The share of each type of cross-links may depend on the type of imidazole derivate used, on the curing temperature and duration, and on the type and length of the polyfunctional carboxylic acid. However, assuming that no conventional cross-linker like sulfur is present in the reaction mixture, the physical properties of the resulting sports floor components will be determined both by the irreversible cross-links and by the reversible cross-links, giving the product both mechanical robustness and the ability to allow a controlled degradation or temporal weakening of the network.

A "natural rubber" as used herein refers to a polymer derived from the latex of rubber trees, e.g., Hevea brasiliensis, composed mainly of cis-1,4-polyisoprene. The natural rubber may be a functionalized or non-functionalized form of natural rubber. For example, the natural rubber can be raw natural rubber, or hydrogenated or functionalized natural rubber. If the natural rubber is epoxidized, it is referred to as ENR.

A "cross-link" as used herein is a covalent or non-covalent bond that joins two or more polymer chains together, forming a three-dimensional network. Cross-links can be covalent (e.g., ester bonds) or non-covalent (e.g., ionic or hydrogen bonds). Cross-links may enhance the material's mechanical properties, such as elasticity, tensile strength, and resistance to deformation, while also improving durability and thermal stability.

A "sports floor" as used herein refers to a surface designed to support athletic and recreational activities, in particular by providing durability, safety, and performance in accordance with the requirements of the respective application. It includes a range of systems such as artificial turf, rubber tiles, hardwood courts, and synthetic surfaces used in sports fields, indoor courts, and playgrounds. In the context of playgrounds, sports flooring also prioritizes impact absorption and safety to minimize injuries from falls while maintaining durability and weather resistance for outdoor environments.

Disclosed herein are methods and products described by the following clauses:
1. A method of manufacturing a sports floor component (200, 404, 500, 600), comprising:
   - mixing (102) epoxidized natural rubber (1102), ENR, a filler (700, 904, 1104, 1112) and imidazole or an imidazole derivate (1202) to provide a rubber composition;
   - curing (106) the rubber composition to form a matrix (1200, 1408) of reversibly cross-linked ENR molecules (1402) incorporating the filler.
2. The method of clause 1, wherein the imidazole derivate is an alkyl-substituted derivate of imidazole, in particular a dialkyl-substituted derivate of imidazole, wherein the alkyl has a chain length shorter than 5 carbon atoms.
3. The method of any one of the previous clauses, wherein the imidazole derivate is a dimethyl-substituted derivative of imidazole, in particular 1,2-dimethyl imidazole.
4. The method of any one of the previous clauses, wherein the mixing comprises mixing the ENR, the filler and the imidazole or imidazole derivate with a polyfunctional carboxylic acid (1206).
5. The method of clause 4, wherein the polyfunctional carboxylic acid is a dicarboxylic acid.
6. The method of any one of clauses 4-5, wherein the polyfunctional carboxylic acid has a chain length from 2 to 15 carbon atoms, in particular from 2 to 12 carbon atoms.
7. The method of any one of clauses 4-6, wherein the polyfunctional carboxylic acid is selected from a group comprising: oxalic acid, malonic acid, succinic acid, glutaric acid, adipic acid, pimelic acid, sebacic acid, and dodecanedioic acid or sebacic acid.
8. The method of any one of clauses 4-7, wherein the polyfunctional carboxylic acid is dodecanedioic acid.
9. The method of any one of clauses 4-8, wherein the polyfunctional carboxylic acid is a reaction product between an epoxidized vegetable oil and a plant-based polyfunctional carboxylic acid.
10. The method of clause 9,
   - wherein the epoxidized vegetable oil is an epoxidized derivative of a vegetable oil selected from a group comprising: soybean oil, linseed oil, palm oil, com oil, cottonseed oil, castor oil, canola oil, rapeseed oil, tung oil, grape seed oil, peanut oil, poppy seed oil, epoxidized tongue oil, sunflower oil, safflower oil, wheat germ oil, walnut oil; and/or
   - wherein the plant-based polyfunctional carboxylic acid is selected from a group comprising: citric acid, oxalic acid, glutaric acid, tartaric acid, succinic acid, adipic acid, malic acid, maleic acid, and fumaric acid.
11. The method of any one of clauses 4-10, wherein the imidazole or imidazole derivate, IMI, and the polyfunctional carboxylic acid, A, are mixed in a molar ratio IMI:A of < 1.5:1.0,in particular of <1.2:1.0, in particular of ≤ 1.0:1.0, in particular a molar ratio IMI:A of 1:3 to 2:3, in particular in a molar ratio of 0.4:1.0 to 0.6:1.0.
12. The method of any one of the previous clauses, wherein the mixing comprises mixing the ENR, the filler and the imidazole or imidazole derivate with one or more additives selected from the group comprising UV-protectants, antioxidants, and anti-ozone agents or combinations thereof.
13. The method of any one of the previous clauses,
   - wherein the mixing (102) is performed at a temperature above 100 °C, in particular at a temperature of 100 °C to 140 °C, in particular at a temperature of 100 °C to 120 °C; and/or
   - wherein the curing (106) is performed at a temperature of 150 °C-200 °C, in particular of 150 °C-180 °C.
14. The method of any one of the previous clauses, wherein the curing is performed in an autoclave, and wherein in particular the curing (106) is performed at a temperature of 150 °C-180 °C, in particular of 160 °C-170 °C.
15. The method of any one of the previous clauses, wherein the ENR has a mole degree of epoxidation of between 20% and 60%, in particular between 40% and 60%.
16. The method of any one of the previous clauses, wherein the filler is:
   - an inorganic filler, in particular an inorganic filler selected from a group comprising: Chalk; Silica (Quartz Sand); Calcium Silicate; Barium Sulfate; Clay or Kaolin; Aluminum Hydroxide; Magnesium Hydroxide; Zinc Oxide; Fly Ash; Talc; Wollastonite; Perlite; or
   - a recycled, plastic-based filler, or
   - an organic filler, in particular Carbon Black or lignin. For example, the filler may be silanized lignin and/or silanized silica covalently cross-linked to the ENR. The method may comprise silanising the filler (lignin and/or silica) under the presence of the ENR, e.g., by reacting the filler, ENR and a silane coupling agent, such that covalent cross-links between the filler and the ENR molecules are formed.
17. The method of any one of the previous clauses, wherein the filler is lignin.
18. The sports floor component of any one clause 17, wherein the lignin is Kraft Lignin.
19. The method of any one of the previous clauses, wherein the filler is lignin and wherein the method comprises:
   - mixing the ENR (1102) and the lignin to form an initial mixture (1108);
   - subjecting the initial mixture for at least 5 minutes at a temperature of 150 °C to 200 °C under continuous mixing to provide a further mixture (1110) with increased dispersion of the lignin (1114) in the ENR (1110); and
   - adding the imidazole or imidazole derivative and optionally also a polyfunctional carboxylic acid to the further mixture, and executing the mixing (102) and the curing (106) on the further mixture.
20. The method of any one of the previous clauses, further comprising: subjecting the sports-floor component to a temperature of 150 °C to 250 °C to break the reversible cross-links.
21. A sports floor component (200, 402, 404) comprising reversibly cross-linked epoxidized natural rubber, and further comprising a filler (700, 904, 1104, 1112).
22. The sports floor component of clause 21, wherein the sports floor component is at least one of:
   - an artificial turf infill;
   - a component, such as a layer, of a running track;
   - a component, such as a layer, of a tennis court;
   - a support mat;
   - a shock pad;
   - a combination thereof.
23. The sports floor component of clause 21 or 22, wherein the ENR is covalently linked to imidazolium groups and wherein the imidazolium groups of some ENR molecules act as cations forming ionic bonds to other ENR molecules.
24. The sports floor component of any one of clauses 21-23, wherein the ENR is covalently linked to imidazolium groups and wherein the imidazolium groups of different ENR molecules act as cations forming ionic bonds to negative carboxyl groups of a polyfunctional carboxylic acid.
25. The sports floor component of any one of clauses 21-24, wherein the filler is silanized silica and/or silanized lignin, wherein preferably the silanization is performed under the presence of the ENR such that covalent cross-links between the filler and the ENR molecules are formed.

While the invention has been illustrated and described in detail in the drawings and foregoing description, such illustration and description are to be considered illustrative or exemplary and not restrictive; the invention is not limited to the disclosed examples.

### REFERENCE SIGNS LIST

- 102-106: steps
- 200: artificial turf infill
- 300: artificial turf
- 400: sports flooring system
- 402: surface layer
- 404: support layer
- 406: base layer
- 500: running track
- 600: shock pad
- 700: lignin
- 800: epoxidation reaction
- 900: matrix of covalently cross-linked ENR molecules
- 902: ENR molecule
- 904: filler molecule
- 906: covalent bond between NR (or ENR) molecules
- 908: covalent bond between a NR (or ENR) molecule and a lignin molecule
- 950: matrix of covalently cross-linked NR (or ENR) molecules linked also to lignin
- 1102: ENR
- 1104: lignin agglomerates
- 1106: cavities
- 1108: ENR-lignin mixture obtained from direct mixing
- 1110: ENR-lignin mixture resulting from HTDHT
- 1112: lignin molecule
- 1114: contact interface lignin-molecule-EN
- 1200: ionically cross-linked ENR network
- 1202: 1, 3 dimethyl imidazole
- 1204: ENR-molecule with imidazolium group
- 1206: dicarboxylic acid
- 1300: ENR network comprising covalent ester and ether cross-links
- 1302: ENR network comprising covalent ester cross-links
- 1400: irreversibly cross-linked ENR network
- 1402: ENR molecule
- 1404: imidazolium group
- 1408: reversibly cross-linked ENR- network

## Claims

1. A method of manufacturing a sports floor component (200, 404, 500, 600), comprising:
- mixing (102) epoxidized natural rubber (1102), ENR, a filler (700, 904, 1104, 1112) and imidazole or an imidazole derivate (1202) to provide a rubber composition;
- curing (106) the rubber composition to form a matrix (1200, 1408) of reversibly cross-linked ENR molecules (1402) incorporating the filler.

2. The method of claim 1, wherein the imidazole derivate is an alkyl-substituted derivate of imidazole, in particular a dialkyl-substituted derivate of imidazole, wherein the alkyl has a chain length shorter than 5 carbon atoms.

3. The method of any one of the previous claims, wherein the imidazole derivate is a dimethyl-substituted derivative of imidazole, in particular 1,2-dimethyl imidazole.

4. The method of any one of the previous claims, wherein the mixing comprises mixing the ENR, the filler and the imidazole or imidazole derivate with a polyfunctional carboxylic acid (1206).

5. The method of claim 4, wherein the polyfunctional carboxylic acid is a dicarboxylic acid.

6. The method of any one of claims 4-5, wherein the polyfunctional carboxylic acid has a chain length from 2 to 15 carbon atoms, in particular from 2 to 12 carbon atoms.

7. The method of any one of claims 4-6, wherein the polyfunctional carboxylic acid is selected from a group comprising: oxalic acid, malonic acid, succinic acid, glutaric acid, adipic acid, pimelic acid, sebacic acid, and dodecanedioic acid or sebacic acid, wherein in particular the polyfunctional carboxylic acid is dodecanedioic acid.

8. The method of any one of claims 4-8, wherein the polyfunctional carboxylic acid is a reaction product between an epoxidized vegetable oil and a plant-based polyfunctional carboxylic acid.

9. The method of any one of claims 4-8, wherein the imidazole or imidazole derivate, IMI, and the polyfunctional carboxylic acid, A, are mixed in a molar ratio IMI:A of < 1.5:1.0,in particular of <1.2:1.0, in particular of ≤ 1.0:1.0, in particular a molar ratio IMI:A of 1:3 to 2:3, in particular in a molar ratio of 0.4:1.0 to 0.6:1.0.

10. The method of any one of the previous claims,
- wherein the mixing (102) is performed at a temperature above 100 °C, in particular at a temperature of 100 °C to 140 °C, in particular at a temperature of 100 °C to 120 °C; and/or
- wherein the curing (106) is performed at a temperature of 150 °C-200 °C, in particular of 150 °C-180 °C; and/or
- wherein the curing is performed in an autoclave.

11. The method of any one of the previous claims, wherein the filler is:
- an inorganic filler, in particular an inorganic filler selected from a group comprising: Chalk; Silica (Quartz Sand); Calcium Silicate; Barium Sulfate; Clay or Kaolin; Aluminum Hydroxide; Magnesium Hydroxide; Zinc Oxide; Fly Ash; Talc; Wollastonite; Perlite; or
- a recycled, plastic-based filler, or
- an organic filler, in particular Carbon Black or lignin, in particular Kraft Lignin; or
- silanized lignin; or
- silanized slica; or
- combinations thereof.

12. The method of any one of the previous claims, wherein the filler is lignin and wherein the method comprises:
- mixing the ENR (1102) and the lignin to form an initial mixture (1108);
- subjecting the initial mixture for at least 5 minutes at a temperature of 150 °C to 200 °C under continuous mixing to provide a further mixture (1110) with increased dispersion of the lignin (1114) in the ENR (1110); and
- adding the imidazole or imidazole derivative and optionally also a polyfunctional carboxylic acid to the further mixture, and executing the mixing (102) and the curing (106) on the further mixture.

13. The method of any one of the previous claims, further comprising: subjecting the sports-floor component to a temperature of 150 °C to 250 °C to break the reversible cross-links.

14. A sports floor component (200, 402, 404) comprising reversibly cross-linked epoxidized natural rubber, and further comprising a filler (700, 904, 1104, 1112).

15. The sports floor component of claim 14, wherein the sports floor component is at least one of:
- an artificial turf infill;
- a component, such as a layer, of a running track;
- a component, such as a layer, of a tennis court;
- a support mat;
- a shock pad;
- a combination thereof.
